# DEMANDE DE BREVET EUROPEEN

(11) **EP 1 731 491 A1**
(43) Date de publication de la demande: **13.12.2006**
(21) Numéro de dépôt: 05291257.3
(22) Date de dépôt: 10.06.2005
(51) Int. Cl.: C04B 28/04, C04B 22/08, C04B 24/00

(54) **Compositions de liant rapide pour pièces et ouvrages en béton contenant un sel de calcium**

(71) Demandeur: LAFARGE, 75116 Paris (FR); Chryso, 92440 Issy-Les-Moulineaux (FR)
(72) Inventeur: Sabio, Serge, 38540 Saint Just Chaleyssin (FR); Pellerin, Bruno, 77210 Avon (FR); Levy, Christophe, 38080 Saint-Marcel-Bel-Accueil (FR); Ghilardi, Serge, 73420 Méry (FR)
(74) Mandataire: Hirsch & Associés

(57) **Abrégé**

L'invention a pour objet un liant rapide comprenant: du ciment; au moins un superplastifiant; du nitrite de calcium; et au moins un dérivé formique.

L'invention a aussi pour objet les bétons obtenus à partir de ce liant et les procédés de fabrication.

## Description

### DOMAINE TECHNIQUE

L'invention a pour objet des compositions de liant rapide à base d'un sel de calcium, utilisées pour la fabrication de pièces et ouvrages en béton.

Par liants rapides pour mortier ou béton on entend des liants à prise et durcissement rapides. Les bétons utilisant de tels liants dans leurs compositions, une fois mis en oeuvre, acquièrent des caractéristiques mécaniques importantes à court terme. Ils ont de préférence une résistance en compression RC d'au moins 1 MPa à 4 heures pour les bétons fluides et d'au moins 1 MPa à 5 heures pour les bétons autoplaçants (ou autocompactants), et d'au moins 12 MPa à 24 h.

Ces bétons sont des bétons fluides ou autoplaçants (ou autocompactants) et ont une durée d'ouvrabilité d'1 heure minimum à 2 heures maximum.

L'ouvrabilité des bétons fluides est mesurée par la hauteur d'affaissement au cône d'Abrams -ou valeur de slump- (selon la norme française NF P 18-451, de décembre 1981) et on estime qu'un béton est fluide lorsque cet affaissement est d'au moins 150 mm, de préférence au moins 180 mm.

L'ouvrabilité des bétons autoplaçants (ou autocompactants) est généralement mesurée à partir du "slumpflow", selon le mode opératoire décrit dans "Specification and Guidelines for Self Compacting Concrete, EFNARC, February 2002, p19-23"; la valeur de l'étalement est supérieure à 650 mm pour les bétons autocompactants (et en général inférieure à 800 mm).

L'invention concerne les bétons, et plus particulièrement les bétons fluides ou autoplaçants (ou autocompactants), destinés à la réalisation de pièces et ouvrages, qu'il s'agisse de pièces préfabriquées en usine, ou des réalisations sur chantiers , comme par exemple des voiles de béton, dalles, etc..

### ARRIERE-PLAN TECHNOLOGIQUE

FR-A-2810314 décrit un liant rapide pour béton autocompactant comprenant du ciment Portland, de l'aluminate de calcium, du sulfate de calcium, un accélérateur et un retardateur, et un agent superplastifiant du type polyphosphonate polyox. Dans ce document, il est indiqué que ce liant permet d'avoir une ouvrabilité supérieure à 1 heure, de pomper le béton grâce à cette formule autocompactante, tout en ayant des résistances mécaniques en compression élevées à 6 heures et à 24 heures, y compris à des températures comprises entre 10 et 35°C. Les applications décrites dans ce document sont la réparation urgente d'ouvrages, le soutènement provisoire de tunnels, galeries, ou autres ouvrages analogues. Il n'y a pas de mention d'application voile béton.

US-P-3427175 décrit des compositions comprenant un système accélérateur contenant un nitrite de calcium. Ce document décrit par ailleurs une cure à une température qui n'est pas compatible avec les températures extérieures classiquement rencontrées sur les chantiers.

JP-A-2000281412 décrit des systèmes accélérateurs contenant un sel de calcium qui est un sulfite ou sulfate de calcium, en association avec un adjuvant organique et un superplastifiant. Il est indiqué que des résistances à la compression sont obtenues en des temps relativement courts, mais les données fournies ne sont que des données obtenues à 24 heures.

GB-A-2033367 et GB-A2058037 décrivent des systèmes accélérateurs comprenant un aluminate de calcium en mélange avec du sulfate de calcium, un hydroxyacide (par exemple acide citrique) et un sel inorganique (par exemple nitrite ou nitrate, le carbonate de sodium étant indiqué comme préféré).

EP-A-537872 décrit un système accélérateur comprenant un nitrite ou nitrate par exemple de calcium en association avec un superplastifiant copolymère spécifique.

On connaît par ailleurs quelques produits commerciaux. On peut citer les produits SIKA, en particulier Sikaprise SC2, contenant du nitrate de calcium, du thiocyanate de sodium et du formol. On peut aussi citer les produits GRACE, en particulier le Polarset, contenant du nitrite de calcium, du nitrate de calcium (et des sels de bromure), une faible quantité de thiocyanate, de méthyldiéthanolamine. On peut encore citer les produits MBT, notamment les produits en combinaison, l'accélérateur Pozzolith NC 534, le superplastifiant haut réducteur d'eau Glenium 3030 et le retardateur Delvo.

US20030127026 (US-P-6858074) décrit un système accélérateur comprenant en association: un superplastifiant de type polycarboxylate, un accélérateur et un retardateur. L'accélérateur peut être choisi notamment parmi les nitrites de métal alcalino-terreux, les thiocyanates, les halogénures, les sels notamment de calcium d'acides par exemple acide formique, etc.. Il n'est pas décrit de mélange de ces composants. Un retardateur est notamment un acide carboxylique. La résistance en flexion est indiquée comme étant d'au moins 2,8 MPa et la résistance en compression comme étant d'au moins 15 MPa, dans un délai de 4 heures après coulée, à une température comprise entre 10 à 38°C.

Les compositions cimentaires décrites selon cette invention ont une durée de maintien d'ouvrabilité limitée à 30 minutes maximum, une forte teneur en ciment et de faibles rapports eau/ciment, compris entre 0,25 à 0,40.

US20040149174 décrit un système similaire à celui objet de la demande précédente, mais en association avec un sel abaissant le point de congélation du mélange. Sont revendiquées des associations d'un superplastifiant du type polycarboxylate, d'un sel abaissant le point de congélation (les nitrites de métaux alcalino-terreux sont cités), d'un accélérateur (sont cités les thiocyanates et les halogénures) et d'un retardateur (sont cités les acides carboxyliques). Les exemples ne précisent pas les composés exacts utilisés, ni ne renseignent sur le maintien de l'ouvrabilité et les résistances mécaniques obtenues à 4 ou 6 heures .Ils concernent des bétons qui ne sont pas des bétons fluides ou autocompactants. Les propriétés ont été étudiées à des températures qui sont dans certains cas de l'ordre de -1°C.

Il existe cependant encore un besoin d'un procédé de fabrication de pièces et ouvrages en béton utilisant des compositions de liants rapides, ayant une longue durée de maintien d'ouvrabilité, conduisant à une acquisition rapide des résistances mécaniques à court terme même à des températures inférieures à 10°C, et permettant ainsi d'augmenter la cadence de réutilisation des coffrages.

### RESUME DE L'INVENTION

L'invention a pour objet un liant rapide comprenant:
- du ciment;
- au moins un superplastifiant;
- du nitrite de calcium; et
- au moins un dérivé formique.

L'invention a encore pour objet un système accélérateur comprenant au moins un superplastifiant, du nitrite de calcium, et au moins un dérivé formique.

L'invention a encore pour objet une composition de béton ou mortier humide comprenant un liant rapide selon l'invention gâché avec de l'eau.

L'invention a aussi pour objet un procédé de préparation de mortier ou béton par gâchage de liant rapide selon l'invention et de granulats avec de l'eau, en particulier mis en oeuvre à une température inférieure ou égale à 10°C.

Enfin l'invention fournit un procédé de préparation d'objets en béton ou de mortier avec double décoffrage en une journée, ledit double décoffrage étant mis en oeuvre à une température inférieure ou égale à 10°C.

### DESCRIPTION DE MODES DE REALISATION DE L'INVENTION.

L'invention est maintenant décrite plus en détails dans la description qui suit.

L'invention est basée sur une combinaison d'additifs contenant au moins un système accélérateur.

Le système accélérateur selon l'invention comprend au moins trois éléments, à savoir un sel de calcium qui est le nitrite de calcium, un adjuvant organique spécifique qui est un dérivé formique et un superplastifiant.

Le sel de calcium est le nitrite de calcium. Ce sel est présent dans la composition de l'accélérateur en des quantités qui peuvent varier de 50 à 90% en poids sec. En général, la quantité est telle que la quantité de nitrite de calcium dans le liant final est comprise entre 0.5 et 10%, de préférence entre 1.5 et 5% en poids sec par rapport au liant final.

Le dérivé formique peut-être sous forme aldéhyde; il s'agit de formaldéhyde ou formol (étant entendu que les polymères par exemple urée-formol ne sont pas des dérivés formiques au sens de l'invention dans la mesure où il n'y pas de libération du monomère formol -ou acide formique ou sel-). Le dérivé formique peut-être sous forme d'acide formique éventuellement sous une forme saline avec un métal alcalin ou alcalino-terreux. Le dérivé formique peut être le formol, l'acide formique ou une forme saline d'un métal alcalin ou alcalino-terreux, ou le formol bisulfite d'un métal alcalin ou alcalino-terreux, notamment bisulfite de sodium.

Les formes aldéhydes simple ou bisulfitique (d'un métal alcalin ou alcalino-terreux) sont préférées, bien que toutes les autres formes soient utilisables.

Le dérivé formique est présent dans la composition de l'accélérateur en des quantités qui peuvent varier de 1 à 5% en poids. En général, la quantité est telle que la quantité du dérivé formique, par rapport au sel nitrite de calcium, est comprise entre 1 et 10% de la quantité de nitrite de calcium, de préférence entre 2 et 5%. Par rapport au poids de liant final, la quantité est telle que la quantité du dérivé formique est comprise entre 0.01 et 1%, de préférence entre 0.05 et 0.5% en poids.

Le superplastifiant est tout superplastifiant utilisé dans l'industrie, tels ceux définis dans la norme européenne EN 934-2.

On pourra utiliser des superplastifiants qui sont du type polyphosphonate polyox ou polysulfonate polyox ou mieux encore de type polycarboxylate polyox (PCP). Un exemple de superplastifiant est celui décrit dans les documents EP-A-537872, US20030127026 et US20040149174, incorporés à la présente par référence.

Un exemple de superplastifiant est celui obtenu par polymérisation:
- d'au moins un monomère ionique du type phosphonique, sulfonique ou carboxylique, de préférence carboxylique et avantageusement de type (méth)acrylique; et
- d'au moins un monomère de type (méth)acrylate de polyéthylène glycol (PEG), en particulier PEG méthyl éther (en position terminale), dont le poids moléculaire est compris par exemple entre 100 et 10000, de préférence entre 500 et 5000 et avantageusement entre 750 et 2000.

Le ratio molaire premier monomère/second monomère peut varier dans de larges mesures, par exemple 75:25 à 45:55, de préférence 65:35 à 55:45.

Il est possible d'utiliser un ou plusieurs tiers monomère(s), par exemple ceux choisis parmi:
(a) type acrylamide, par exemple N,N-diméthylacrylamide, 2,2'-diméthylamino (méth)acrylate ou ses sels, 2,2'-diméthylaminoalkyle (méth)acrylate ou ses sels avec le groupe alkyl et en particulier éthyle et propyle, et de façon générale tout monomère contenant une fonction de type amine ou amide;
(b) type hydrophobe, par exemple (méth)acrylate d'alkyle en C1 à C18, en particulier méthyle ou éthyle.

La quantité de ce tiers monomère peut être comprise entre 5 et 25% mol du total des monomères.

Un exemple particulier d'un superplastifiant utilisé dans l'invention est celui obtenu par polymérisation de 40 à 65% d'acide (méth)acrylique, 25 à 40% de (méth)acrylate PEG méthyl éther notamment de poids moléculaire compris entre 750 et 2000, et 5 à 25% d'un monomère de type (a) ou (b), en particulier de type (a) et notamment 2,2'-diméthylaminoalkyle (méth)acrylate.

Les superplastifiants se présentent sous une forme pouvant varier de la forme liquide à la forme solide, en passant par la forme cireuse.

Ce superplastifiant est présent dans la composition du système accélérateur en des quantités qui peuvent varier de 10 à 30% en poids, % calculés à partir des extraits secs des constituants du système. Le dosage du superplastifiant par rapport au liant est en général compris entre 0.1 et 5% en poids (% calculés à partir de l'extrait sec du superplastifiant), de préférence entre 0.1 et 2% en poids par rapport au poids du liant. Pour un superplastifiant liquide en général on aura une quantité telle qu'il sera présent à raison de préférence de 1 à 10, de préférence 2 à 7 1/m³ du mélange gâché de béton final.

Le liant ou système accélérateur peut contenir d'autres composants en plus des trois composés précités. On peut citer notamment les composés suivants, seuls ou en mélange:
(i) thiocyanate d'un métal alcalin ou alcalino-terreux ou d'aluminium;
(ii) halogénure ou halogénate d'un métal alcalin ou alcalino-terreux ou d'aluminium;
(iii) nitrate d'un métal alcalin ou alcalino-terreux ou d'aluminium;
(iv) amine, alcanolamine, polyhydroxyalkylamine;
(v) thiosulfate d'un métal alcalin ou alcalino-terreux ou d'aluminium;
(vi) hydroxyde d'un métal alcalin ou alcalino-terreux ou d'aluminium;
(vii) sel d'acide carboxylique d'un métal alcalin ou alcalino-terreux ou d'aluminium, l'acide étant différent de l'acide formique;
(viii) étheroxyde;
(ix) sucres.

On utilisera par exemple du thiocyanate et/ou du bromure de calcium, sodium ou potassium comme coaccélérateurs du nitrite de calcium.

La quantité de ces autres composés associés au système accélérateur peut représenter, par exemple jusqu'à 20% en poids du nitrite de calcium.

Une telle association permet d'obtenir certains effets d'amélioration du compromis entre maîtrise de la rhéologie et acquisition rapide des performances.

Le liant destiné à former le béton humide comprend en général, par rapport au poids sec du liant:
- 99.5 à 90% de ciment Portland;
- 0.5 à 10% du système accélérateur.

Avantageusement, le liant comprend:
- 99 à 95% de ciment Portland;
- 1 à 5% du système accélérateur.

Le ciment Portland est classique et conforme aux familles décrites dans la norme européenne EN 197-1. On pourra utiliser par exemple un ciment CEM1 52.5 N ou R, CEM2 de type 32.5, 32.5 R, 42.5 ou 42.5 R. Le ciment peut être du type HRI (à Haute Résistance Initiale).

Avantageusement, le ciment Portland est un ciment, préférentiellement broyé à une finesse d'au moins 4000 cm²/g.

Le taux d'alcalins solubles sera de préférence inférieur à 1%, avantageusement inférieur à 0.6%, en poids exprimé en équivalent Na₂O. Avantageusement, la quantité de C4AF est inférieure à 8% en poids, avantageusement inférieure à 4%, et la quantité de C3S du clinker de départ est supérieure à 60% en poids.

La quantité finale du système accélérateur dépend de la température d'utilisation du béton, du procédé exact de mise en oeuvre, du niveau de résistances à obtenir, etc.. Par ailleurs, cette quantité est ajustée en fonction des quantités finales des différents composants dans le mélange de béton final.

Le béton comprenant ce superplastifiant est avantageusement fluide ou autocompactant (autoplaçant).

Il pourra, en plus du système accélérateur, contenir d'autres types d'additifs couramment utilisés dans les bétons.

A titre d'exemple d'additifs susceptibles d'être utilisés, on peut citer: entraîneurs d'air, agents anti-mousse, inhibiteurs de corrosion, agents de réduction du retrait, fibres, pigments, agents de modification de la rhéologie, précurseurs d'hydratation, polymères hydrosolubles, agents d'aide à la pompabilité, agents réducteurs d'alcalis réactions, agents de renforcement, composés hydrofugeants et leurs mélanges.

Les composés de la composition finale de béton peuvent être mis en oeuvre dans l'ordre suivant:
- selon un premier mode de réalisation, on ajoute la totalité des composants du système accélérateur dès le départ, lors du malaxage du béton, au niveau de la centrale à béton; on gâche le ciment et le système accélérateur complet, à savoir nitrite de calcium, dérivé formique et superplastifiant. Le malaxage au niveau de la centrale à béton pourra être fait soit dans un malaxeur fixe, soit dans un camion toupie lorsque celui-ci est utilisé directement comme malaxeur. L'invention vise donc le procédé dans lequel la totalité des composants est introduite dès le malaxage du liant rapide avec les granulats et l'eau.
- selon un second mode de réalisation, le nitrite de calcium sera ajouté en différé par rapport aux autres composants du système accélérateur, par exemple au niveau du camion-toupie, avant le départ de la centrale à béton, ou au cours du trajet centrale/chantier, ou au niveau du chantier juste avant la coulée. L'invention vise donc aussi le procédé dans lequel le nitrite de calcium est introduit postérieurement au malaxage des autres composants du liant rapide avec les granulats et l'eau.

Selon le second mode de réalisation, les temps choisis pour cette introduction différée peuvent être de 10 à 90 minutes, de préférence 20 à 60 minutes après le gâchage avec les autres composants du système accélérateur, superplastifiant et/ou dérivé formique. L'invention vise donc aussi le procédé dans lequel le nitrite de calcium est introduit de 10 à 90 minutes, de préférence de 20 à 60 minutes postérieurement.

On préfèrera le premier mode de réalisation, car les différents constituants (ciment, composants du système accélérateur) pourront alors tous être ajoutés et dosés précisément en une seule étape au niveau de la centrale à béton

De façon générale, le rapport en poids d'eau efficace sur liant sec (rapport E/C) est compris en général entre 0,45 et 0,65.

La composition finale comprend des granulats classiques (sables, graviers et/ou cailloux). Préférentiellement, les constituants de la composition finale ont une taille inférieure ou égale à 20 mm préférentiellement inférieure ou égale à 10 mm dans le cas des bétons autoplaçants (ou autocompactants). La composition peut ainsi être pompée facilement.

Le rapport en poids sec de granulats sur liant est compris en général entre 4 et 5.

Les compositions de béton selon l'invention sont faciles à mettre en oeuvre et sont d'un coût faible. Elles ont une rhéologie adaptée, impliquant préférentiellement une durée d'ouvrabilité (après gâchage) d'une heure minimum et d'une heure et demie à deux heures maximum et un durcissement très rapide. L'ouvrabilité de ces bétons selon l'invention est en général comprise entre 1 et 2 heures.Par durée d'ouvrabilité, on entend la durée de maintien de fluidité, qui correspond au délai de début de prise; en général les valeurs de slump (béton fluide) sont d'au moins 15cm, de préférence au moins 18cm.

Le béton selon l'invention peut être un béton fluide, notamment un béton fluide présentant à 90 minutes un affaissement d'au moins 15 cm, de préférence au moins 18 cm. Il peut avoir une résistance en compression, dès 4h à compter de la fin du malaxage, de l'ordre de 1MPa au moins et de préférence au moins de 2MPa, et de au moins 12MPa à 24h, mesurée sur des éprouvettes cylindriques de dimension 16cmx32cm.

Le béton selon l'invention peut aussi être un béton autoplaçant, notamment un béton autoplaçant présentant à 90 minutes un étalement supérieur à 650 mm. Il peut avoir une résistance en compression, dès 5h à compter de la fin du malaxage, de l'ordre de 1MPa au moins et de préférence au moins de 2MPa, et de au moins 12MPa à 24h, mesurée sur des éprouvettes cylindriques de dimension 16cmx32cm.

Quant le malaxage est mis en oeuvre dans un camion-toupie, le temps est compté à partir de l'instant de l'introduction dans la toupie du dernier constituant de la composition de béton.

Ces deux propriétés de maintien de l'ouvrabilité et de fortes résistances à court terme permettent notamment de réaliser une composition de béton précurseur en centrale de béton et de la transporter ensuite sur un chantier par camion-toupie, la composition durcissant rapidement une fois mise en oeuvre. Ces qualités du liant permettent également de le pomper mécaniquement grâce à sa fluidité et de le couler ou pomper dans un coffrage en obtenant un durcissement rapide. On aura ainsi la possibilité de décoffrer puis recoffrer ensuite rapidement, afin de pouvoir procéder à un nouveau coulage du béton.

Le liant rapide pour bétons fluides ou autoplaçants (autocompactants) de l'invention est facilement pompable ou coulable, notamment sans vibration dans le cas des bétons autocompactants, ce qui le rend par exemple particulièrement adapté à la fabrication des voiles béton.

L'invention vise tout particulièrement la fabrication de voiles béton, par coulage et/ou pompage. L'invention est utile pour la fabrication de voiles béton à des températures extérieures comprises notamment entre -5°C et 30°C, en particulier inférieure à 10°C. On rappellera qu'un voile béton est défini en maçonnerie comme "toute paroi verticale et pleine en béton banché".

Par ailleurs, l'invention fournit aussi un procédé de fabrication, notamment de voiles béton, par double décoffrage journalier à des températures inférieures ou égales à 10°C, en particulier faisant emploi du système accélérateur selon l'invention. En effet, l'invention selon un autre mode de réalisation, fournit un tel procédé qui permet donc de couler deux voiles béton dans une journée, même à des températures faibles. En effet, selon l'invention, on a maintenant constaté que les compositions selon l'invention, grâce à leurs propriétés de prise rapide même à faible température, permettent d'atteindre ce double décoffrage. Il a aussi été trouvé qu'il est possible, pour autant que les compositions soient rapides et maintiennent leur ouvrabilité, de rompre avec l'approche traditionnelle, et de procéder même à des températures faibles, à un double-décoffrage.

### EXEMPLES

Les exemples suivants illustrent l'invention sans la limiter.

### Exemple 1.

On prépare un mortier ayant la composition suivante (parties en kg/m³):

| | |
|---|---|
| Ciment Portland CEM I | 863.0 |
| Filler calcaire | 215.8 |
| Sable 0-0.315 | 456.6 |
| Sable 0.315-1 | 611.9 |
| Sable 1-4 | 881.3 |
| Eau | 422.9 |

Le ratio E/C est de 0.49.

Différentes compositions sont testées, toutes comprenant un superplastifiant qui est du Glenium 27 de la société MBT. On teste les compositions suivantes:
A: type selon l'invention (nitrite de calcium avec formol).
B: type à base de Sikaprise SC2
C: type à base de PozzolithNC534
D: type à base de Polarset

Une première série d'essais est réalisée avec les compositions suivantes :

| Composition | Glenium 27 | Accélérateur |
|---|---|---|
| A1 | 0.35% | 3.15% invention (nitrite 98%, formol 2% (poids)) |
| B1 | 0.26% | 3% Sikaprise SC2 |
| C1 | 0.27% | 3% PozzolithNC534 |

Avec le ciment de Saint Pierre La Cour, qui est du type CEM1 52,5 N selon la norme EN 197-1, les résultats obtenus (à 20°C) sont les suivants :

**Tableau 1**

| Composition | Affaissement* en mm | | RC en MPa 5h30mn |
|---|---|---|---|
| | 60mn | 90mn | |
| A1 | 290 | 279 | 4,7 |
| B1 | 275 | 229 | 1,3 |
| C1 | 280 | 238 | 3,1 |

| | | | |
|---|---|---|---|
| * mesuré à l'aide d'un cône selon une échelle 1/2 par rapport au cône d'Abrams, dans le cas des mortiers de béton. | | | |

La composition A1 selon l'invention présente, à 90 min, un étalement nettement supérieur à celui obtenu avec les compositions B1 et C1, avec un écart d'environ 50mm pour un étalement de plus de 270 mm.

Les résistances mécaniques à échéance de 5h30mn sont aussi nettement améliorées. Par ailleurs, pour la composition A1, la résistance mécanique à 4 heures est de 2.5 MPa.

Une deuxième série d'essais (les conditions restant par ailleurs inchangées) est réalisée avec les compositions suivantes:

| Composition | Glenium 27 | Accélérateur |
|---|---|---|
| A2 | 0.35% | 3.15% invention (nitrite 98%, formol 2% (poids)) |
| B2 | 0.24% | 3% Sikaprise SC2 |
| C2 | 0.30% | 3% PozzolithNC534 |
| D2 | 0.26% | 3% Polarset |

Avec le ciment du Havre qui est du type CEM1 52,5 N selon la norme EN 197-1, les résultats obtenus sont les suivants :

**Tableau 2**

| Composition | Affaissement* en mm | | RC en MPa 5h30mn |
|---|---|---|---|
| | 60mn | 90mn | |
| A2 | 320 | 300 | 6,7 |
| B2 | 260 | 180 | 2,0 |
| C2 | 280 | 220 | 3,4 |
| D2 | 240 | <170 | 7,5 |

| | | | |
|---|---|---|---|
| * mesuré à l'aide d'un cône selon une échelle 1/2 par rapport au cône d'Abrams, dans le cas des mortiers de béton. | | | |

Avec le ciment du Havre qui est du type CEM1 52,5 N, la composition A2 selon l'invention présente, à 90min, un étalement nettement supérieur à celui obtenu avec les compositions B2, C2 et D2, avec un écart d'au moins 80mm pour un étalement de 300 mm.

Les résistances mécaniques en compression à échéance de 5h30mn sont aussi nettement améliorées par rapport aux compositions B2 et C2, et du même ordre que celle de D2, malgré une durée de maintien de l'étalement plus que doublée.

### Exemple 2.

On prépare un béton ayant la composition suivante (parties en kg/m³):

| | |
|---|---|
| Ciment Portland CEM I | 350 |
| Filler BL200 | 100 |
| Sable 0-4 | 765 |
| Granulat 4-14 | 1057 |
| Eau total gâchage | 175 |

Le ratio E/C est de 0.5.

On ajoute un superplastifiant Optima 203, du nitrite de calcium avec une quantité de formol variable par rapport au poids de nitrite.

On prépare les compositions suivantes:

| Ex. | Optima | Nitrite + formol (sec/sec) | Nitrite/formol (% sec/sec) |
|---|---|---|---|
| A3 | 2.8 l/m³ | 4% | 98.4/1.6 |
| A4 | 3 l/m³ | 2.5% | 97.5/2.5 |
| A5 | 3.9 l/m³ | 2.2% | 97.2/2.8 |

On obtient les résultats suivants, aux températures suivantes:

**Tableau 3**

| Composition | Temp. | Affaissement 90 min en mm | RC 4h (MPa) | RC 5h30 (MPa) |
|---|---|---|---|---|
| A3 | 6°C | 220 | 1.1 | 2.2 |
| A4 | 20°C | 170 | 3.7 | 9.3 |
| A5 | 30°C | 200 | 1.9 | 6.8 |

### Exemple 3.

Cet exemple donne les résultats obtenus avec un béton autoplaçant (compactant) en utilisant le FBS (Formaldéhyde bisulfite de sodium) et l'effet de celui-ci sur la rhéologie et l'acquisition de résistances. La température est de 20°C.

On prépare deux compositions de béton ayant les composition suivantes : (les % du nitrite de calcium et du formaldéhyde bisulfite de sodium son exprimés par rapport au ciment).

| | A6 | A7 |
|---|---|---|
| Ciment Portland CEM I | 350 kg/m³ | 350 kg/m³ |
| Filler Entrains | 183 kg/m³ | 183 kg/m³ |
| Sable 0/4 Anneville | 760 kg/m³ | 760 kg/m³ |
| Sablon GSI | 85 kg/m³ | 85 kg/m³ |
| Gravier 3/8 La Brosse | 720 kg/m³ | 720 kg/m³ |
| Eau totale | 220 kg/m³ | 220 kg/m³ |
| Glénium 27 | 3,4 l/m³ | 3,4 l/m³ |
| Nitrite de calcium | 2,65% | 2,65% |
| Formaldéhyde bisulfite sodium | 0,00% | 0,23% |
| | | |
| Slump flow 5 min. | 720 cm | 670 cm |
| Slump flow 15 min. | 700 | 720 |
| Slump flow 30 min. | 660 | 730 |
| Slump flow 60 min. | 520 | 700 |
| Slump flow 90 min. | 290 | 650 |
| | | |
| RC 4heures (MPa) | nd | 0,7 |
| RC 5heures (MPa) | 1,2 | 2,2 |

L'ajout de formaldéhyde bisulfite de sodium permet de gagner au minimum 45 minutes de temps ouvert.

## Revendications

1. Liant rapide comprenant:
- du ciment;
- au moins un superplastifiant;
- du nitrite de calcium; et
- au moins un dérivé formique.

2. Liant rapide selon la revendication 1, dans lequel le dérivé formique est le formol, l'acide formique ou une forme saline d'un métal alcalin ou alcalino-terreux, ou le formol bisulfite d'un métal alcalin ou alcalino-terreux.

3. Liant rapide selon la revendication 1, dans lequel le dérivé formique est le formol ou le formol bisulfite d'un métal alcalin ou alcalino-terreux.

4. Liant rapide selon l'une des revendications 1 à 3, comprenant:
- 99.5 à 90%, de préférence de 99 à 95% de ciment Portland;
- 0.5 à 10%, de préférence de 1 à 5% des composants:
- au moins un superplastifiant;
- du nitrite de calcium; et
- au moins un dérivé formique.

5. Liant rapide selon l'une des revendications 1 à 4, dans lequel le superplastifiant est du type polycarboxylate polyox.

6. Liant rapide selon l'une des revendications 1 à 5, dans lequel la quantité de nitrite de calcium dans le liant est comprise entre 0.5 et 10%, de préférence entre 1.5 et 5% en poids par rapport au liant.

7. Liant rapide selon l'une des revendications 1 à 6, dans lequel la quantité du dérivé formique, par rapport au sel nitrite de calcium, est comprise entre 1 et 10% de la quantité de nitrite de calcium, de préférence entre 2 et 5%.

8. Liant rapide selon l'une des revendications 4 à 7, dans lequel la quantité de superplastifiant, considérée en extrait sec, dans le liant est comprise entre 0.1 et 5% en poids, de préférence entre 0.2 et 2% en poids par rapport au poids du liant.

9. Liant rapide selon l'une des revendications 1 à 8, comprenant en outre au moins un additif classiquement utilisé dans les bétons.

10. Liant rapide selon l'une des revendications 1 à 9, comprenant en outre au moins un additif choisi dans le groupe consistant en entraîneurs d'air, agents anti-mousse, inhibiteurs de corrosion, agents de réduction du retrait, fibres, pigments, agents de modification de la rhéologie, précurseurs d'hydratation, polymères hydrosolubles, agents d'aide à la pompabilité, agents réducteurs d'alcalis réactions, agents de renforcement, composés hydrofugeants et leurs mélanges.

11. Liant rapide selon l'une des revendications 1 à 10, comprenant en outre un composé, seul ou en mélange, choisi parmi:
(i) thiocyanate d'un métal alcalin ou alcalino-terreux ou d'aluminium;
(ii) halogénure ou halogénate d'un métal alcalin ou alcalino-terreux ou d'aluminium;
(iii) nitrate d'un métal alcalin ou alcalino-terreux ou d'aluminium;
(iv) amine, alcanolamine, polyhydroxyalkylamine;
(v) thiosulfate d'un métal alcalin ou alcalino-terreux ou d'aluminium;
(vi) hydroxyde d'un métal alcalin ou alcalino-terreux ou d'aluminium;
(vii) sel d'acide carboxylique d'un métal alcalin ou alcalino-terreux ou d'aluminium, l'acide étant différent de l'acide formique;
(viii) étheroxyde;
(ix) sucres.

12. Liant rapide selon la revendication 11, comprenant en outre du thiocyanate et/ou du bromure de calcium, sodium ou potassium.

13. Liant rapide selon la revendication 11 ou 12, dans lequel la quantité dudit composé est jusqu'à 20% en poids du nitrite de calcium.

14. Système accélérateur comprenant au moins un superplastifiant, du nitrite de calcium, et au moins un dérivé formique tel que décrit dans les revendications 1 à 13.

15. Composition de béton ou mortier humide comprenant un liant rapide selon l'une des revendications 1 à 13 gâché avec de l'eau.

16. Composition selon la revendication 15 gâché avec un rapport E/C compris entre 0.45 et 0.65.

17. Composition selon la revendication 15 ou 16, qui est un béton fluide.

18. Composition selon la revendication 17, qui est un béton fluide présentant à 90 minutes un affaissement d'au moins 15 cm, de préférence au moins 18 cm.

19. Composition selon la revendication 17 ou 18 présentant, après prise hydraulique, une résistance à la compression d'au moins 1 MPa à 4 heures.

20. Composition selon la revendication 15 ou 16, qui est un béton autoplaçant.

21. Composition selon la revendication 20, qui est un béton autoplaçant présentant à 90 minutes un étalement supérieur à 650 mm.

22. Composition selon la revendication 20 ou 21 présentant, après prise hydraulique, une résistance à la compression d'au moins 1 MPa à 5 heures.

23. Composition selon l'une des revendications 15 à 22, ayant une ouvrabilité comprise entre 1 et 2 heures.

24. Procédé de préparation de mortier ou béton par gâchage de liant rapide selon l'une des revendications 1 à 13 et de granulats avec de l'eau.

25. Procédé de préparation selon la revendication 24, dans lequel la totalité des composants est introduite dès le malaxage du liant rapide avec les granulats et l'eau.

26. Procédé de préparation selon la revendication 24, dans lequel le nitrite de calcium est introduit postérieurement au malaxage des autres composants du liant rapide avec les granulats et l'eau.

27. Procédé de préparation selon la revendication 26, dans lequel le nitrite de calcium est introduit de 10 à 90 minutes, de préférence de 20 à 60 minutes postérieurement.

28. Procédé selon l'une des revendications 24 à 27, mis en oeuvre à une température inférieure ou égale à 10°C.

29. Procédé selon l'une des revendications 24 à 28, mis en oeuvre avec double décoffrage en une journée.

30. Procédé de préparation d'objets en béton ou de mortier avec double décoffrage en une journée, ledit double décoffrage étant mis en oeuvre à une température inférieure ou égale à 10°C.

31. Procédé selon l'une des revendications 24 à 30 pour la formation de voiles béton.
